# EUROPÄISCHE PATENTANMELDUNG

(11) **EP 4 339 488 A1**
(43) Veröffentlichungstag der Anmeldung: **20.03.2024**
(21) Anmeldenummer: 22196090.9
(22) Anmeldetag: 16.09.2022
(51) Int. Cl.: F16H 57/08, F16H 57/023

(54) **INDUSTRIEGETRIEBE MIT WENIGSTENS EINER VERSCHLEISSMINDERNDEN KRAFT-/REIBSCHLÜSSIG GELAGERTEN ACHSE SOWIE VERFAHREN UND VERWENDUNG**

(71) Anmelder: Flender GmbH, 46395 Bocholt (DE)
(72) Erfinder: Fingerle, Thorsten, 46395 Bocholt (DE); Lohmann, Christoph, 46395 Bocholt (DE); Lensing, Volker, 46395 Bocholt (DE); Kleine-Brockhoff, Ralf, 46395 Bocholt (DE)
(74) Vertreter: Michalski Hüttermann & Partner Patentanwälte mbB

(57) **Zusammenfassung**

Die vorliegende Erfindung betrifft ein Industriegetriebe (100) aufweisend wenigstens eine Achse (101) und wenigstens eine Achsaufnahme (103) zur Lagerung der Achse, wobei die Achse in wenigstens einem Axialabschnitt (X1, X2) in der Achsaufnahme gelagert ist; wobei die Achse (101) mit wenigstens einer verschleißmindernden Oberfläche ausgestattet ist mittels wenigstens eines strukturierten Oberflächenabschnitts (10.1) kraft-/reibschlüssigen gegen axiale Verlagerung in der Achsaufnahme gelagert ist, insbesondere mit dem Industriegetriebe in Ausgestaltung als Planetengetriebe oder umfassend wenigstens eine Planetengetriebestufe. Ferner betrifft die vorliegende Erfindung auch verschleißmindernde Achsen mit wenigstens einem strukturierten Oberflächenabschnitt für ein solches Industriegetriebe. Ferner betrifft die vorliegende Erfindung entsprechende Verfahren und Verwendungen.

## Beschreibung

### TECHNISCHES GEBIET

Die vorliegende Erfindung betrifft ein Industriegetriebe aufweisend wenigstens eine Achse und wenigstens eine Achsaufnahme zur Lagerung der Achse, wobei die Achse in wenigstens einem Axialabschnitt in der Achsaufnahme (axial-)fest gelagert ist, wahlweise in zwei Axialabschnitten insbesondere jeweils an einem freien Ende der Achse gelagert ist, wobei die Achse mit einer verschleißmindernden Oberfläche ausgestattet ist, insbesondere mit dem Industriegetriebe in Ausgestaltung als Planetengetriebe oder umfassend wenigstens eine Planetengetriebestufe. Ferner betrifft die vorliegende Erfindung auch verschleißmindernde Achsen mit wenigstens einer strukturierten Oberfläche für ein solches Industriegetriebe. Insbesondere betrifft die vorliegende Erfindung ein Industriegetriebe gemäß Merkmalen des unabhängigen Vorrichtungsanspruchs sowie Verfahren und Verwendungen gemäß den nebengeordneten Ansprüchen.

### HINTERGRUND DER ERFINDUNG

Hohe Leistungsdichten in Getrieben wie z.B. Planetengetrieben, Industriegetrieben, Windenergieanlagengetrieben bzw. -triebsträngen erfordern hinreichende Steifigkeiten insbesondere auch der drehmomentführenden Komponenten sowie entsprechender Befestigungen und Einspannungen. Speziell in Planetengetrieben neigen Achseinspannungen an Planetenträgern mit Multiplaneten unter Last insbesondere bei Unterschreitung ausreichender Pressung zu nachteiligen Mikrobewegungen, wodurch potentiell spürbar erhöhter Verschleiß hervorgerufen wird. Es wurde nun erkannt, dass derartige lokale Mikrobewegungen (und damit einher gehender Verschleiß) in Abhängigkeit von einem leistungsdichte-induzierten Steifigkeitsverlust umgebender Bauteile zunehmend wahrscheinlicher werden. Demnach besteht insbesondere bei für lange Betriebsdauern ausgelegten Industriegetrieben aus dem hohen Leistungsspektrum großes Interesse daran, diese Mikrobewegungen möglichst vollständig unterbinden zu können.

Bisher werden Achseinspannungen in dieser Hinsicht durch Verlängerung der Einspannlänge (insbesondere bei damit einher gehenden nachteiligeren Bauraumanforderungen) und/oder durch Erhöhung der Passung und damit ansteigender Pressung im Kontaktbereich zwischen Achse und Achsaufnahme (insbesondere Bohrung) realisiert. In Abhängigkeit von der Art und Weise der Belastung können sich die Bereiche rund um die Achseinspannungen jedoch elastisch deformieren, insbesondere auch in einem Planetenträger. Dies wirkt sich insbesondere bei dünnwandigen Komponenten potentiell sehr negativ insbesondere auch auf benachbarte Lagersitze aus. Nachteilig ist dabei auch ein sich selbst verstärkender Negativ-Effekt aus einem sich mehr und mehr lockernden bzw. weitenden Presssitz, was in der Folge zu noch größeren Verschiebungen bzw. Relativbewegungen im Kontaktbereich führt, wodurch wiederum mehr Material bzw. Abrieb durch Reibverschleiß erzeugt wird. Durch Verschleiß freigesetzte Partikel führen potentiell zu großen oder noch größeren Sekundärschäden, beispielsweise durch Abrasion, wodurch die Lebensdauer des Getriebes potentiell sehr stark sinkt.

Es besteht demnach großes Interesse an einer Minimierung des Verschleißes insbesondere im Zusammenhang mit den hier beschriebenen Eigenheiten von Industriegetrieben, speziell auch in Planetengetrieben insbesondere bei vergleichsweise hohen oder dynamischen Belastungen wie z.B. in Triebsträngen von Windenergieanlagen.

### ZUSAMMENFASSUNG DER ERFINDUNG

Es ist die Aufgabe der vorliegenden Erfindung, Maßnahmen aufzuzeigen, mittels welchen eine spürbare Verschleißminderung an einer Schnittstelle von Achse zu Achsaufnahme in Industriegetrieben sichergestellt werden kann, insbesondere bei Minimierung von dadurch begründeten etwaigen konstruktiven Nachteilen betreffend die gesamte Getriebekonstruktion speziell auch bei Planetengetrieben. Insbesondere besteht die Aufgabe auch darin, eine axialfeste Lagerung an der Schnittstelle Achse/Achsaufnahme für eine hochbelastbare Drehmomentübertragung bzw. für eine im Bedarfsfall besonders hohe Flächenpressung bei möglichst variantenreicher Verwendbarkeit in unterschiedlichen Getriebearten bereitzustellen, insbesondere auch in Planetengetrieben.

Die Lösung der Aufgabe erfolgt durch ein Industriegetriebe mit den Merkmalen des Anspruchs 1, durch eine Achse hergestellt gemäß den Merkmalen des entsprechenden nebengeordneten Verfahrensanspruchs und durch entsprechende Verwendungen gemäß den Merkmalen des entsprechenden nebengeordneten Verwendungsanspruchs. Bevorzugte Ausgestaltungen sind in den Unteransprüchen und in der nachfolgenden Beschreibung angegeben, die jeweils einzeln oder in Kombination miteinander einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft eine besonders verschleißmindernde Achse zur Lagerung von wenigstens einer Getriebekomponente, z.B. Planetenrädern, in einem (Industrie-)Getriebe, beispielsweise in einem Planetengetriebe. Bereitgestellt wird insofern ein Industriegetriebe aufweisend wenigstens eine Achse und wenigstens eine Achsaufnahme zur (festen bzw. axialfesten) Lagerung der Achse, insbesondere Achse eines Planetenrades, wobei die Achse in wenigstens einem Axialabschnitt in der Achsaufnahme gelagert ist; wobei die Achse mittels wenigstens eines strukturierten Oberflächenabschnitts kraft-/reibschlüssigen gegen axiale Verlagerung in der Achsaufnahme gelagert ist, wobei die Achse und die Achsaufnahme unmittelbare Kontaktpartner sind. Erfindungsgemäß wird demnach vorgeschlagen, eine Oberflächenstrukturierung für eine Achseinspannung bereitzustellen, welche derart strukturiert ist, dass eine ausreichende rein kraftschlüssige axiale Fixierung sichergestellt werden kann, bei direktem Kontaktieren von Achse und Achsaufnahme. Dies ermöglicht auch ein schlankeres konstruktives Konzept z.B. hinsichtlich irgendwelcher nun nicht mehr notwendigerweise erforderlichen Axialsicherungselemente. Mit anderen Worten ermöglicht die erfindungsgemäße Oberflächenstrukturierungsmaßnahme auch ein schlankes und insbesondere auch im hohen Leistungsbereich vorteilhaft realisierbares Getriebedesign mit einer minimierten Anzahl von Komponenten im bzw. für den Achssitz.

Die erfindungsgemäße Maßnahme führt auch zu einer Verbesserung der Montierbarkeit (insbesondere ohne noch stärkeres Aufweiten der Bohrung/Achsaufnahme als bisher bereits in vielen Anwendungsfällen erforderlich), insbesondere da die vorzusehenden Passungen nicht noch stärker ansteigen (nicht höher werden). Im Gegensatz zu einer Strukturierung der Achsbohrung hat es sich insbesondere auch in Hinblick auf den Fertigungsprozess in vielen Anwendungsfällen als vorteilhafter bzw. technisch sinnvoller erwiesen, die einfacher zu handhabende Achse zum Bereitstellen einer Oberflächenstrukturierung zu nutzen. Die Strukturierung kann dabei auf unterschiedlichen Werkstoffen und Werkstoffkombinationen realisiert werden, so dass die vorliegende Erfindung unabhängig von etwaigen gewünschten Änderungen der Werkstoffpartner (Materialpaarungen) realisierbar ist. Wahlweise kann auch eine/die Verdrehsicherung entbehrlich werden, insbesondere auch aus Kostengründen. Die Bezugnahme der vorliegenden Erfindung auf die Achse als strukturiertes Bauteil schließt dabei jedoch nicht aus, dass weitere Bauteile/Komponenten mit strukturierten Oberflächen versehen sind/werden.

Eine gezielte (Laser-)Strukturierung in wenigstens einem Axialabschnitt der Achse im Kontaktbereich zur Achsaufnahme (z.B. Planetenträger) ermöglicht eine Steigerung des Reibwerts (bzw. Haftreibungskoeffizienten) insbesondere bei einer Passung Achse/Bohrung, wodurch effektiv lokalen Mikrobewegungen und damit unkontrolliertem Reibverschleiß entgegengewirkt werden kann. Eine derartige Erhöhung des Reibwertes ermöglicht auch, die Gesamtsteifigkeit zu steigern, insbesondere in einer Baugruppe umfassend Planetenträger und Planetenachsen, so dass sich eine Verformung der Trägerbaugruppe unter Belastung spürbar reduzieren lässt. Die hier beschriebene Oberflächenstruktur kann dabei sowohl über den gesamten Umfang oder spezifisch optimiert an lokalen kritischen Übergangsbereichen der Achse im entsprechenden Axialabschnitt erzeugt werden bzw. vorgesehen sein. Beispielsweise wird dabei ein Liniendichte und/oder Ausrichtung der Struktur und/oder Intensität und Form der Struktur individualisiert. Mittels (Laser-)Strukturierung kann eine nicht lösbare, martensitisch harte Oberflächenstruktur geschaffen werden, welche die einzuhaltenden Toleranzen der Achse (beispielsweise zuvor durch Präzisionsbearbeitung erreichte Toleranzen) nicht oder unwesentlich beeinträchtigt, denn eine Formgebung im Sinne einer spürbaren geometrischen Veränderung der Oberflächenkontur wird nicht vorgenommen. Beispielsweise ist eine/die Laserstrukturierung über den gesamten Achsumfang vorgesehen und/oder axial in der Belastungs- und Hemmungsrichtung in Zonen aufgeteilt und entsprechend stärker, schwächer, hemmend oder in Fügerichtung reduziert wirkend vorgesehen.

Es hat sich gezeigt, dass das erfindungsgemäße Strukturieren der Achsoberfläche vorteilhaft auch mit weiteren insbesondere vorgelagerten Herstellungs-/Fertigungsschritten kombiniert werden kann, insbesondere auch für eine serielle Fertigung vergleichsweise großer Stückzahlen; so können beispielsweise für eine Laserstrukturierung der Achsflächen (kontaktierende Oberflächenbereiche der Achse) als auch für ein Auftragen von Gleitlagerschichten (z.B. auf beschichten Gleitlagerachsabschnitten von Planetenachsen) zumindest teilweise die gleichen Anlagen und Maschinen genutzt werden (insbesondere Laserschweißanlagen für Laserauftragsschweißen in Kombination mit Laserstrukturieren). Dadurch lässt sich auch der Herstellungsprozess der jeweiligen Achse zeitlich und kostentechnisch optimieren, beispielsweise auch indem Logistik-/Transportkosten spürbar verringert/vermieden werden. Soweit hier von Strukturierung gesprochen wird, ist vornehmlich auf ein Laserstrukturieren Bezug genommen; gleichwohl kann das erfindungsgemäße Konzept auch mit anderen/alternativen Strukturierungsarten realisiert werden. Insofern umfasst die Erfindung auch alternative partielle/bedarfsgerechte Strukturen, welche hinsichtlich der Art/Form der Belastung optimiert in die jeweilige Oberfläche eingebracht sind.

Grundsätzlich besteht die Möglichkeit, sowohl die Achse als auch die Achsaufnahme gemäß den hier beschriebenen Maßnahmen zu strukturieren. Bevorzugt wird die Strukturierung zumindest auf der Achse vorgesehen und wahlweise zusätzlich in der Achsaufhahme; besonders vorteilhaft wird die Achse bestehend aus deutlich härterem Material/Werkstoff bereitgestellt als die Achsaufhahme; dann nämlich kann die axialfeste Verbindung auch dann besonders effektiv wirken, wenn die Achsaufnahme nicht strukturiert ist (auch insofern kann weiterer Aufwand eingespart werden). Dabei kann die in die Achsoberfläche aufgeprägt Struktur besonders effektiv in der Achsaufnahme verankert werden (insbesondere auch im Sinne eines Eindrückens in einen relativ weicheren Kontaktpartner). Dabei kann die Achse im jeweiligen Kontaktbereich wahlweise zylindrisch oder z.B. auch konisch ausgeführt sein.

Die vorliegende Erfindung ermöglicht nicht zuletzt eine gezielte lokale Optimierung von mechanisch vergleichsweise stark belasteten Schnittstellen, insbesondere indem in wenigstens einem Axialabschnitt eine dank (Laser-)Strukturierung vergleichsweise stark individualisierbare Kontaktfläche für Kraftschluss (Haftreibung) bereitgestellt wird. Eine solche Achseinspannung bietet dabei auch zahlreiche weitere auch indirekte Vorteile, wie z.B. einen vergleichsweise schlanken/kostengünstigen Fertigungsansatz betreffend den Einsatz von Lasern insbesondere über einen mehrstufigen Herstellungsprozess auch umfassend ein Laser(auftrags)schweißen. Besonders vorteilhafte Anwendungsbereiche ergeben sich beispielsweise auch für Windkraftgeneratorgetriebe mit Gleitlagerung, für Planetenradgetriebe und zahlreiche weitere Industrieanwendungen.

Vorteilhaft kann die feste bzw. axialfeste Lagerung bereits durch (Laser-)Strukturierung nur eines der Kontaktpartner realisiert werden; die kraftschlüssig wirkende Oberflächenstruktur liefert dabei insbesondere an der Achse große Vorteile auch hinsichtlich Fertigungsaufwand und Montage. Dabei hat sich speziell bei Planetengetrieben auch gezeigt, dass die schwächere und somit verschleißgefährdetere Komponente (bzw. eine besonders schwache Komponente) in der Regel die Achsaufnahme ist (bzw. eine entsprechende Planetenträgerbohrung), welche sich aufgrund der Dimension der Achsaufnahmen bzw. des Planetenträgers und dessen Beschaffenheit (z.B. Materialzusammensetzung, beispielsweise relativ weiches Material, beispielsweise Gussmaterial) nur aufwändig im Verschleißschutz ertüchtigen lässt. Auch in dieser Hinsicht ermöglicht die Erfindung eine Überwindung bisheriger Schwierigkeiten.

Anders ausgedrückt basiert die Erfindung auch auf dem Konzept, eine Achse bereitzustellen, welche den Verschleißschutz im Bereich einer/der Achsaufnahme, z.B. einer (Planeten)Trägerbohrung auf individualisierbare und anwendungsspezifische Weise sicherstellen kann, nämlich durch Vorgabe einer bestimmten Oberflächenstruktur beispielsweise auch in Verbindung mit einer bestimmten Materialhärte und/oder Normalkraft bzw. Passung. Die Achse verbessert dabei die Verschleißfestigkeit speziell im Bereich wenigstens einer Einspannstelle der Achse, und zwar weitgehend unabhängig vom Grundmaterial. Die Achse kann dabei auch aus einer oder mehreren Lagen unterschiedlicher Werkstoffe bestehen. Dabei bieten harte Lagen einen vorteilhaft ausgeprägten Verschleißschutz, während weiche Lagen vornehmlich auch eine elastische Verformung sicherstellen können, insbesondere ohne dabei zu fließen. Insofern kann eine entsprechend gewählte Werkstoffkombination auch eine vorteilhafte funktionale Integration in nur ein einzelnes Maschinenelement ermöglichen (mehrfache Funktion). Der Fachmann kann dabei für den jeweiligen Anwendungsfall insbesondere in Abhängigkeit der Materialien von Achse und Aufnahme individuell bestimmen, welche Härtebereichen jeweils als relativ hart und als relativ weich zu erachten sind.

Die Achse kann kraft-/haftreibschlüssig bevorzugt an zwei Axialabschnitten durch/aufgrund entsprechender (Laser-)Strukturierung einem axialen Herausverlagern aus der Achsbohrung (bzw. einer entsprechenden axialen Relativbewegung) und einem unkontrollierten Reibverschleiß effektiv entgegenwirken (wahlweise kann zusätzlich auch eine stoffschlüssige Fixierung vorgesehen sein, im Sinne einer zusätzlichen Sicherung, ohne dass diese Sicherung für hohen Kraftfluss aufkommen muss). In wenigstens einem Axialabschnitt kann dabei wahlweise auch eine leicht konische Geometrie gewählt werden. Durch die (Laser-)Strukturierung kann dabei auch eine nicht auflösbare (nicht zurückverformbare) vergleichsweise harte Oberflächenstruktur geschaffen werden, welche die zuvor üblicherweise durch Präzisionsbearbeitung erreichten Toleranzen (bzw. die für eine jeweilige Anwendung geforderten Toleranzen) der Achse nicht oder allenfalls nur unwesentlich beeinträchtigt.

Dabei kann eine jeweilige der hier beschriebenen Strukturierungs-Arten wahlweise über den Umfang und/oder axial in der Belastungs- und Bewegungsrichtung in Zonen aufgeteilt sein und entsprechend stärker, schwächer, hemmend oder in Fügerichtung reduziert wirkend ausgelegt bzw. konfiguriert bzw. konfektioniert sein. Innerhalb dieser Zonen können insbesondere eine Liniendichte, die Richtung der Struktur und/oder die Intensität und Form der (Laser-)Struktur auf spezifische Eigenheiten und Anforderungen des jeweiligen Achskontaktes angepasst werden. Auch insofern liefert die vorliegende Erfindung einen vergleichsweise hohen Variabilitätsgrad. Dabei kann die Achse auch einseitig verdickt oder verjüngt sein, insbesondere zwecks Ausgleichs von Positionstoleranzen der Achsaufnahmen (bzw. Trägerbohrungen) durch Orientierung bei der Montage. Dies führt nicht zuletzt auch zu verbesserten Tragfähigkeiten. Insofern liefert die vorliegende Erfindung auch eine technisch leicht realisierbare Lösung für unterschiedliche Montagesituationen. Die Achsaufnahme bzw. Trägerbohrung kann dabei wahlweise zylindrisch gerade, konisch oder ballig geformt oder mit wahlweise auch Nuten zur axialen und/oder tangentialen Sicherung ausgeführt sein/werden. Die Achsaufnahme bzw. ein wahlweise ebenfalls zu strukturierender Achssitz kann dabei vorzugsweise zylindrisch oder auch konisch, schraubenförmig oder wellenförmig ausgeführt sein/werden, insbesondere auch in Hinblick auf eine gegen Verdrehung selbsthemmende Ausgestaltung. Dabei können auch Werkstoffe mit ähnlichen Eigenschaften miteinander kombiniert werden (z.B. hinsichtlich Gefügestruktur, Härte). Dabei kann die vorliegende Erfindung sowohl für Neuprodukte als auch im Zusammenhang mit Serviceanwendungen implementiert werden.

Es hat sich gezeigt, dass die vorliegende Erfindung auch die folgenden Vorteile sicherstellen kann: Im Vergleich zu bisherigen Paarungen ohne für Kraftschluss optimierte (Laser-)Strukturoberfläche findet keine unkontrollierte Anfangs-Konditionierung des Achskontaktes statt. Dies bewirkt auch spürbar weniger Materialeintrag ins Öl und Getriebe. Insbesondere wird die Vermeidung von kaltverfestigten Partikeln erleichtert, welche die Lager oder Verzahnung schädigen könnten. Die verbesserte Einspannung reduziert speziell in einem Planetengetriebe beispielsweise auch radiale und axiale Deformationen des Planetenträgers, was wiederum die Mikrobewegung im Achskontakt reduziert und damit zur Minderung des Reibverschleißes beiträgt. Weiterhin können Strukturbauteile nun leichter gewichtsoptimiert dimensioniert werden. Durch die erreichte Steifigkeitserhöhung verbessert sich das Tragverhalten der Baugruppe, wobei insbesondere auch eine effizientere Dimensionierung der Verzahnung und Lagerung ermöglicht wird. Diese Maßnahmen stehen auch in unmittelbarem Zusammenhang mit Leistungsdichtesteigerungen.

Als "kraftschlüssig" und im engeren Sinne "reibschlüssig" bzw. "haftreibschlüssig" (unter Bezugnahme auf Verbindungen ohne zulässige Relativbewegung) ist hier insbesondere eine feste Verbindung ohne das Erfordernis von spezifischer Formgebung oder geometrischen Unebenheiten wie z.B. Kanten oder Absätzen oder spürbaren Rillen oder Sägezahnprofilen oder dergleichen zu verstehen, wobei diese Wirkungsweise hier insbesondere auch durch Bezugnahme auf vollständig plane/ebene Oberflächen (insbesondere zylindrische oder konische Mantelflächen) realisiert werden kann, auf welche also keine Absätze oder Kanten in geometrischem Sinne vorliegen müssen, sondern welche eine Haftung/Fixierung gemäß einer durch die Strukturierung definierten Haftreibungszahl sicherstellen können. Der Kraftschluss kann dabei in Abhängigkeit von einer bestimmten auf die Kontaktflächen wirkenden Normalkraft sichergestellt sein (wohingegen bei Formschluss eine solche Normalkraft nicht notwendigerweise erforderlich ist/wäre). Die vorliegende Offenbarung ist auch so zu verstehen, dass bei Bezugnahme auf "Kraftschluss" die entsprechende Oberfläche für eine im Wesentlichen kraftschlüssige Verbindung vorgesehen bzw. ausgelegt bzw. konfiguriert ist. Als "formschlüssig" wäre im Gegensatz dazu eine Verbindung zu verstehen, welche im Wesentlichen auf Formschluss im Sinne einer mechanischen Verzahnung basiert, also beruhend auf geometrischen Gegebenheiten der jeweiligen Oberfläche, die bereits allein aufgrund der Formgebung auch dann ein Verankern bzw. Aneinanderhaften der Kontaktpartner bewirken, wenn keine Normalkraft wirkt.

Als "Industriegetriebe" ist dabei allgemein eine Getriebevorrichtung für industrielle Anwendungen zu verstehen, beispielsweise in Ausgestaltung als (Kegel)Stirnrad- oder Planetengetriebe oder Schneckenextrudergetriebe oder Schiffsgetriebe oder Generatorgetriebe oder Baggergetriebe oder Mühlengetriebe oder Fahrwerksgetriebe jeweils mit wenigstens einer Getriebestufe. Beispielsweise umfasst ein hier beschriebenes Industriegetriebe wenigstens eine Planetengetriebestufe. Sofern gemäß der vorliegenden Offenbarung bezüglich des Industriegetriebes auf eine Achsaufnahme Bezug genommen wird, so bezieht sich dies bei Planetenträgern insbesondere auch auf Achsbohrungen im Planetenträger. Die vorliegende Offenbarung bezieht sich jedoch unabhängig vom Getriebetyp allgemein auf Achsaufnahmen jeglicher Ausgestaltung.

Als feste bzw. axialfeste Lagerung ist dabei insbesondere eine Lagerung/Befestigung zu verstehen, bei welcher keine nennenswerten Drehmomente zu übertragen sind oder bei welcher vorrangig eine axialfeste Positionierung der Kontaktpartner von Bedeutung ist; die Achse ist in der Achsaufnahme in einer vordefinierten axialen Soll-Position angeordnet und definiert dabei z.B. eine Drehachse für ein mittels eines Planetenträgers geführten Planetenrad. Der Begriff "axialfest" kann demnach auch eine drehfeste Anordnung umfassen; gemäß der vorliegenden Offenbarung wird der Begriff "axialfest" verwendet, da für die avisierten Anwendungen vornehmlich die Aufgabe einer Minimierung axialer Relativbewegungen zu überwinden ist. Gleichwohl können die hier im Zusammenhang mit der axialfesten Anordnung beschriebenen Vorteile auch weiter durch eine mit den erfindungsgemäßen Maßnahmen einhergehende verbesserte Drehfestigkeit ausgeprägt sein/werden.

Personifizierte Begriffe, soweit sie hier nicht im Neutrum formuliert sind, können im Rahmen der vorliegenden Offenbarung alle Geschlechter betreffen. Etwaige hier verwendete englischsprachige Ausdrücke oder Abkürzungen sind jeweils branchenübliche Fachausdrücke und sind dem Fachmann in englischer Sprache geläufig. Etwaige dazu oder anderweitig synonym verwendete/verwendbare deutschsprachige Begriffe können hier der Vollständigkeit halber in (Klammern) angegeben werden, oder vice versa.

Im Folgenden wird spezifischer auf einzelne Ausführungsbeispiele eingegangen; die im Folgenden jeweils beschriebenen Merkmalskombinationen sind miteinander kombinierbar, sofern dies hier nicht explizit negiert ist.

Gemäß einem Ausführungsbeispiel weist die Achse in zumindest einem zylindrischen Oberflächenabschnitt einen kraftschlüssig wirkenden strukturierten Außenmantelflächenabschnitt auf, welcher derart rein kraftschlüssig fest/axialfest in der Achsaufnahme insbesondere in der Art einer Passung zur Anlage kommt, dass eine/die zwischen Achse und Achsaufnahme im entsprechenden Oberflächenabschnitt wirkende Normalkraft eine axiale Relativbewegung (unterkritisch) reduziert bzw. unterbindet/verhindert. Dies begünstigt nicht zuletzt auch ein sehr sicheres und robustes Langzeitverhalten nicht zuletzt auch dank reduzierbarer Anzahl von Komponenten z.B. in Verbindung mit einer axialen Sicherung.

Gemäß einem Ausführungsbeispiel ist die strukturierte Oberfläche zur kraftschlüssigen Abstützung in axialer Richtung in wenigstens einem Axialabschnitt mit einer kraftschlüssig wirkenden strukturierten Oberflächenstruktur mit insbesondere im Vergleich zu den weiteren nicht bearbeiteten Flächenabschnitten der Achse oder der Achsaufnahme erhöhtem Haftreibkoeffizient versehen, insbesondere einem Haftreibkoeffizient von mindestens 0,5 (insbesondere bei metallischen Materialpaarungen/Kontaktpartnern, bei trockenem Richtwert). Dies ermöglicht nicht zuletzt auch eine kosten-/aufwandsoptimierte Ausgestaltung insbesondere auch für den Fall dass unterschiedliche Axialabschnitte der Achse unterschiedliche Funktionen erfüllen sollen (z.B. auch eine Gleitlagerfunktion).

Gemäß einem Ausführungsbeispiel variiert der wenigstens eine laserstrukturierte Oberflächenabschnitt über den Umfang bzw. in Umfangsrichtung (insbesondere in geometrischer Hinsicht).

Gemäß einem Ausführungsbeispiel ist der wenigstens eine (laser-)strukturierte Oberflächenabschnitt vollständig umlaufend im entsprechenden Axialabschnitt an der Mantelfläche der Achse ausgeprägt, insbesondere an einem der Enden der Achse, beispielsweise mit einer axialen Länge im Bereich von 30 bis 70% der Dicke der Achse. Dies begünstigt nicht zuletzt auch eine robuste Ausgestaltung in Hinblick auf unterschiedliche Arten der Krafteinwirkung, also nicht nur in axialer Richtung, sondern auch hinsichtlich möglichst maximal möglicher reibschlüssiger Verankerung an der zur Verfügung stehenden Kontaktfläche. Dies kann auch eine möglichst breitflächig verteilte Kraftweiterleitung begünstigen.

Gemäß einem Ausführungsbeispiel ist die strukturierte, insbesondere laserstrukturierte Oberfläche an wenigstens einer Seite eines um die Achse gelagerten Rades vorgesehen.

Gemäß einem Ausführungsbeispiel ist die laserstrukturierte Oberfläche beidseitig eines um die Achse gelagerten Rades (insbesondere Planetenrades) bzw. einer dafür vorgesehenen Lagerfläche ausgestaltet. Eine beidseitig insbesondere im Bereich der beiden Enden der Achse ausgestaltete Laserstrukturierung kann dabei auch eine besonders exakte Ausrichtung und stabile Lagerung der Achse auch bei sehr kurzer Baulänge bzw. bei nur wenig verfügbarem Bauraum begünstigen.

Gemäß einem Ausführungsbeispiel ist eine/die Strukturierung des strukturierten Oberflächenabschnitts in einzelnen Segmenten des strukturierten Oberflächenabschnitts unterbrochen.

Gemäß einem Ausführungsbeispiel ist die Achse zumindest im radial außenliegenden Bereich der kontaktierenden Oberfläche bzw. im jeweiligen Axialabschnitt relativ härter ausgestaltet bzw. besteht aus einem relativ härteren Werkstoff (oder Werkstoff-/Materialkombination) als die Achsaufnahme zumindest im korrespondierenden Kontaktbereich. Hierdurch kann auch vorteilhaft ein verankerndes Einwirken der Struktur/Laserstruktur auf die Oberfläche der Achsaufnahme herbeigeführt werden, insbesondere bei großen Normalkräften; diese Ausgestaltung der Härtegrade liefert insbesondere auch dann Vorteile, wenn eine bestimmte Art und Weise der Nachbearbeitung oder Konfektionierung der Achsaufnahme nicht gewünscht wird, nicht möglich ist, oder gern auch ganz entbehrlich werden soll.

Gemäß einem Ausführungsbeispiel ist innerhalb wenigstens eines Oberflächenabschnitts der Achse eine Liniendichte und/oder Richtung der Struktur und/oder Intensität und Form der Struktur individualisiert, insbesondere derart dass (je nach Einbausituation und insbesondere auch je nach Normalkraft bzw. je nach Art einer/der Passung der Kontaktpartner) ein Haftreibkoeffizient von mindestens 0,5 (zumindest partiell) in axialer Richtung über den strukturierten Oberflächenabschnitt sichergestellt ist. Die vorliegende Erfindung ermöglicht bei großer Flexibilität/Variabilität eine Individualisierung zumindest hinsichtlich dieser Parameter auf vergleichsweise einfache Weise insbesondere auch bei Integration eines (Laser-)Strukturierungsprozesses in eine Abfolge weiterer Herstellungsschritte.

Gemäß einem Ausführungsbeispiel ist das Industriegetriebe als Planetengetriebe ausgestaltet, wobei eine/die Achsaufnahme in einem Planetenträger des Planetengetriebes vorgesehen ist, insbesondere in Ausgestaltung als Planetenträgerbohrung, und wobei die Achse als Planetenachse formschlüssig gegen axiale Relativbewegung am Planetenträger angeordnet ist bzw. dort verschleißmindernd wirkt. Bei Verwendung der hier beschriebenen Achsen in Planetengetrieben insbesondere hochbelasteter Triebstränge werden die hier beschriebenen Vorteile besonders spürbar. Je nach Anzahl von Planetenrädern ist die Anzahl der Achsen individuell adaptierbar. Die hier beschriebene Ausgestaltung der Achse(n) kann dabei auch an weiteren Stellen (Einbaupunkten) innerhalb des Planetengetriebes realisiert sein.

Beispielsweise ist das Industriegetriebe in einem Triebstrang einer Windenergieanlage verbaut ist oder dafür konfiguriert.

Gemäß einem Ausführungsbeispiel ist die jeweilige Achse in zwei Axialabschnitten in der Achsaufnahme (axialfest) gelagert, wahlweise jeweils mit zylindrischen oder konischen Kontaktflächen, wobei die laserstrukturierte Oberfläche in den beiden Axialabschnitten wahlweise die gleiche oder eine unterschiedliche Konfektionierung aufweist. Je nach gewünschter Montageart oder Passung kann die hier beschriebene Struktur/Laserstruktur auch auf einer geneigten Fläche vorgesehen werden, also z.B. bei konischer Geometrie. Dies erhöht auch die Variabilität und begünstigt auch eine Implementierung mit potentiell weiteren gegebenenfalls zu verbauenden Maschinenelementen. Alternativ ist die jeweilige Achse in zwei Axialabschnitten in der Achsaufnahme fest bzw. axialfest gelagert, nämlich einerseits mit zylindrischer und andererseits mit konischer Kontaktfläche, wobei die laserstrukturierte Oberfläche in den beiden Axialabschnitten eine unterschiedliche Konfektionierung aufweist, insbesondere in Abhängigkeit einer Montageart und/oder einer zylindrischen oder konischen Geometrie des entsprechenden Achsabschnittes. Dies ermöglicht auch eine noch stärkere Individualisierung und spezifischere Berücksichtigung von Besonderheiten wie z.B. einer bestimmten Einbausituation oder dem Zusammenwirken mit weiteren Maschinenelementen.

Ein Aspekt betrifft ferner ein Herstellungsverfahren, insbesondere zum fertigungsprozesstechnischen Integration des/der Verfahrensschritte/s einer Laserstrukturierung in weitere Herstellungsschritte einer/der Achse. Die zuvor genannte Aufgabe wird insofern auch gelöst durch ein Verfahren gemäß dem entsprechenden nebengeordneten Verfahrensanspruch, nämlich durch ein Verfahren zum Herstellen einer verschleißmindernden Achse zur Verwendung in einem Industriegetriebe in wenigstens einer Achsaufnahme zur festen bzw. axialfesten Lagerung der Achse in der Achsaufnahme, insbesondere zur Verwendung an einem Planetenträger eines Planetengetriebes, wobei in zumindest einem axialen Oberflächenabschnitt (Axialabschnitt) der Achse eine laserstrukturierte Oberfläche eingebracht wird, die eingerichtet ist zur kraftschlüssigen Abstützung in der Achsaufnahme gegen axiale Verlagerung, insbesondere mittels einer Laserschweißanlage welche ferner auch eingerichtet ist zum Laserschweißen/Laserauftragsschweißen, insbesondere in Kombination mit dem Ausbilden wenigstens eines Gleitlagerabschnitts in einem weiteren Axialabschnitt der Achse, insbesondere einer zuvor weiter oben beschriebenen Achse. Hierdurch ergeben sich zuvor genannte Vorteile, insbesondere auch in Hinblick auf minimierten Kosten-/Fertigungsaufwand sowie größere Variationsmöglichkeiten oder auch in Hinblick auf eine Entbehrlichkeit etwaiger weiterer Maschinenelemente.

Gemäß einer Ausführungsform wird in zumindest einem Oberflächenabschnitt der Achse eine im Wesentlichen kraftschlüssig wirkende Oberfläche durch wenigstens eine der folgenden Laserstrukturierungsmaßnahmen eingebracht, wobei die laserstrukturierte Oberfläche bevorzugt in Abhängigkeit von wenigstens einem vordefinierten/vordefinierbaren spezifischen Erhabenheits- und/oder Dichteparameter generiert wird, insbesondere in wellen- oder schlangenlinienförmiger Struktur oder in schuppenartiger Struktur (jeweils symmetrisch oder asymmetrisch): Laserstrukturieren eines ersten axialen Flächenabschnitts insbesondere vollumfänglich an der Achse, Laserstrukturieren von wenigstens zwei axialen Flächenabschnitten insbesondere bei Variation der Ausrichtung der Struktur in wenigstens zwei Raumrichtungen, Laserstrukturieren bei axial und/oder rotierend bewegter Achse, Laserstrukturieren bei feststehender Achse. Diese Variationsmöglichkeiten ermöglichen nicht zuletzt auch einen hohen Grad an Individualisierbarkeit sowie eine vergleichsweise flexible Abstimmung mit etwaigen vor- und/oder nachgelagerten Prozessschritten insbesondere auf derselben Fertigungslinie/-anlage. Dabei kann das Laserstrukturieren auch im Nachgang zu einem Laser(auftrags)schweißen und/oder im Nachgang zum Ausbilden wenigstens eines Gleitlagerabschnitts insbesondere in/mittels derselben Laseranlage oder in/mittels derselben Fertigungslinie umfassend wenigstens eine Laseranlage vorgenommen werden.

Bevorzugt wird in einem ersten Axialabschnitt eine erste Struktur/Laserstruktur und in einem zweiten Axialabschnitt eine zweite Struktur/Laserstruktur eingebracht, wobei die erste und zweite Struktur/Laserstruktur unterschiedliche Parameter aufweisen bzw. bei voneinander unterschiedlichen Laserparametern eingebracht wurden. Dies ermöglicht eine Optimierung des jeweiligen kraftschlüssigen Kontakts z.B. in Hinblick auf den Betrag oder die Art der vorherrschenden Kräfte/Momente/Belastungen. Dies begünstigt nicht zuletzt auch einen individuell optimierten Achssitz speziell bei Planetenträgern.

Die zuvor genannte Aufgabe wird auch gelöst durch eine verschleißmindernde Achse für ein Industriegetriebe aufweisend eine Achsaufnahme zur Lagerung der Achse, wobei die Achse hergestellt ist durch wenigstens einen der folgenden Schritte: Bereitstellen einer Grundform eines bevorzugt einstückigen Grundkörpers der Achse insbesondere nach einem Laser(auftrags)schweißen oder im Nachgang zu einer Bearbeitung wenigstens eines Gleitlagerabschnitts der Achse insbesondere in/mittels derselben Laseranlage, Einbringen wenigstens einer zur kraftschlüssigen Abstützung gegen axiale Relativbewegung eingerichteten strukturierten Oberfläche in zumindest einem Axialabschnitt der Achse durch Laserstrukturieren insbesondere gemäß wenigstens einer der folgenden Laserstrukturierungsmaßnahmen insbesondere in Abhängigkeit von wenigstens einem vordefinierten/vordefinierbaren spezifischen Erhabenheits- und/oder Dichteparameter: Laserstrukturieren eines ersten axialen Flächenabschnitts insbesondere vollumfänglich an der Achse, Laserstrukturieren von wenigstens zwei axialen Flächenabschnitten insbesondere bei Variation der Ausrichtung der Struktur in wenigstens zwei Raumrichtungen, Laserstrukturieren bei axial und/oder rotierend bewegter Achse, Laserstrukturieren bei feststehender Achse; wobei die Achse insbesondere hergestellt ist durch ein zuvor weiter oben beschriebenes Verfahren und insbesondere ausgestaltet ist gemäß den Merkmalen einer/der zuvor weiter oben beschriebenen Achse. Hierdurch lassen sich zuvor genannte Vorteile realisieren, insbesondere auch in Hinblick auf effizientes Bereitstellen der Achsen bei dennoch großer Individualisierbarkeit einer jeweiligen Ausgestaltung der Achse(n).

Die zuvor genannte Aufgabe wird auch gelöst durch Verwendung einer Vielzahl von verschleißmindernden Achsen in einem Industriegetriebe mit wenigstens einer Planetengetriebestufe in einer Achsaufnahme eines Planetenträgers zur Lagerung der Achsen, wobei die jeweilige Achse mit wenigstens einem für Kraftschluss eingerichteten Außenmantelflächenabschnitt, bevorzugt mit zwei Außenmantelflächenabschnitten beidseitig einer Gleitlagerfläche, mit kraftschlüssig wirkender laserstrukturierter Kraftschlussstruktur derart kraftschlüssig ohne formschlüssige Konturen in der Achsaufnahme die Achsaufnahme direkt mantelflächig kontaktierend zur Anlage kommt, dass ein Reibwert (bzw. Haftreibungskoeffizient) größer 0,5 sichergestellt ist, insbesondere indem die jeweilige Achse und die Achsaufnahme eine Passung mit vordefinierbarer Normalkraft bilden, insbesondere Verwendung der Vielzahl von verschleißmindernden Achsen für bereits bestehende und verbaute Getriebe/-komponenten, insbesondere entsprechende Verwendung von zuvor weiter oben beschriebenen Achsen. Hierdurch lassen sich zuvor genannte Vorteile realisieren, insbesondere auch in Hinblick auf eine effiziente/effektive funktionale Integration in die Achse für eine lange robuste Betriebsweise auch bei hohen dynamischen Belastungen.

Die zuvor genannte Aufgabe wird auch gelöst durch Verwendung wenigstens einer verschleißmindernden Achse in einem Industriegetriebe in einer Achsaufnahme zur Lagerung der Achse, insbesondere jeweils als Planetenachsen in einem Planetenträger eines Planetengetriebes, wobei die Achse an einer für Kraftschluss eingerichteten Außenmantelfläche in zwei Außenmantelflächenabschnitten jeweils eine kraftschlüssig wirkende laserstrukturierte Struktur aufweist, welche kraft-/reibschlüssig in der Achsaufnahme angeordnet sind/werden, wobei im ersten Außenmantelflächenabschnitt eine erste Struktur/Laserstruktur und im weiteren Außenmantelflächenabschnitt eine zweite Struktur/Laserstruktur eingebracht ist, wobei die erste und zweite Struktur/Laserstruktur unterschiedliche (Formgebungs-)Parameter aufweisen bzw. sich strukturell voneinander unterscheiden, wobei die Achse bevorzugt thermisch in die Achsaufnahme eingebracht ist/wird, insbesondere mit der Achse auch umfassend wenigstens eine Gleitlagerfläche für ein Planetenrad, insbesondere entsprechende Verwendung von zuvor weiter oben beschriebenen Achsen. Hierdurch lassen sich zuvor genannte Vorteile realisieren, insbesondere in Hinblick auf eine an der jeweiligen Kontakt-/Lagerstelle sehr spezifisch optimierte Kraftschlussverbindung ohne das Erfordernis zusätzlichen Formschlusses.

Zusammenfassung: Die vorliegende Erfindung betrifft ein Industriegetriebe aufweisend wenigstens eine Achse und wenigstens eine Achsaufnahme zur festen/axialfesten Lagerung der Achse, wobei die Achse in wenigstens einem Axialabschnitt in der Achsaufnahme gelagert ist; wobei die Achse mit wenigstens einer verschleißmindernden Oberfläche ausgestattet ist mittels wenigstens eines laserstrukturierten Oberflächenabschnitts kraft-/reibschlüssigen gegen axiale Verlagerung in der Achsaufnahme gelagert ist, insbesondere mit dem Industriegetriebe in Ausgestaltung als Planetengetriebe oder umfassend wenigstens eine Planetengetriebestufe. Ferner betrifft die vorliegende Erfindung auch verschleißmindernde Achsen mit wenigstens einem laserstrukturierten Oberflächenabschnitt für solche Industriegetriebe. Ferner betrifft die vorliegende Erfindung entsprechende Verfahren und Verwendungen.

### KURZE BESCHREIBUNG DER FIGUREN

In den nachfolgenden Zeichnungsfiguren wird die Erfindung noch näher anhand bevorzugter Ausführungsbeispiele exemplarisch beschrieben, wobei die nachfolgend dargestellten Merkmale sowohl jeweils einzeln als auch in Kombination einen Aspekt der Erfindung darstellen können, und wobei für Bezugszeichen, die nicht explizit in einer jeweiligen Zeichnungsfigur beschrieben werden, auf die anderen Zeichnungsfiguren verwiesen wird. Es zeigen jeweils in schematischer Darstellung:
**Figur 1** in einer geschnittenen Seitenansicht Komponenten eines Industriegetriebes gemäß einem Ausführungsbeispiel;
**Figur 2** in einer perspektivischen Detailansicht eine verschleißmindernde Achse zur Verwendung in einem Industriegetriebe gemäß Ausführungsbeispielen;
**Figur 3** einzelne Schritte eines Verfahrens zum Herstellen einer verschleißmindernde Achse gemäß Ausführungsbeispielen;

### DETAILLIERTE BESCHREIBUNG DER FIGUREN

Die Erfindung wird zunächst unter allgemeiner Bezugnahme auf alle Bezugsziffern und Figuren erläutert. Besonderheiten oder Einzelaspekte oder in der jeweiligen Figur gut sichtbare/darstellbare Aspekte der vorliegenden Erfindung werden individuell im Zusammenhang mit der jeweiligen Figur thematisiert.

Bereitgestellt wird ein Industriegetriebe 100 umfassend wenigstens eine in einer Achsaufnahme 103 (z.B. Gussbohrung in Planetenträger, Planetenträgerbohrung) in axialer Richtung (x)axialfest gelagerte Achse 101 (insbesondere Planetenachse) mit Laserstrukturierung 10, die beispielsweise in zwei Axialabschnitten X1, X2 der Achse vorgesehen ist, insbesondere am jeweiligen Achsende.

Die Struktierung/Laserstrukturierung 10 umfasst wenigstens eine/n (laser-)strukturierte/n Oberfläche(nabschnitt) 10.1 an wenigstens einer Außenmantelfläche der Achse (die Achse kann wahlweise unterschiedliche Durchmesser an unterschiedlichen Axialabschnitten aufweisen und demnach auch mehrere Außenmantelflächen aufweisen). Bevorzugt ist sowohl ein erster als auch ein zweiter kraftschlüssig wirksamer Außenmantelflächenabschnitt 10.1a, 10.1b vorgesehen, wobei die Struktur/Laserstruktur jeweils auch individuell ausgeprägt sein kann.

Mittels der Laserstrukturkontaktoberfläche(n) kann insbesondere in Verbindung mit einer vergleichsweise hohen Normalkraft **Fn** eine axialfeste kraftschlüssige (insbesondere ausschließlich kraft-/haftreibschlüssige) Verbindung ohne das Erfordernis von Formschluss zwischen Achse und Achsaufnahme bereitgestellt werden, insbesondere bei vorteilhaft robuster konstanter Wirkungsweise auch über eine lange Betriebsdauer. Die Normalkraft **Fn** wirkt im strukturierten Oberflächenabschnitt und ist im Wesentlichen in radialer Richtung (r) ausgerichtet und kann beispielsweise durch eine bestimmte Art und Weise der Montage und/oder durch eine bestimmte Passung vergleichsweise exakt vordefiniert werden und für den jeweiligen Anwendungsfall und die getroffene Materialauswahl (Materialpaarung Achse, Achsaufnahme) individuell optimiert werden.

Das Industriegetriebes 100 ist beispielsweise als Planetengetriebe ausgestaltet und umfasst dann wenigstens einen Planetenträger 105, an welchem die jeweilige Achsaufnahme 103 ausgebildet ist, wobei mittels des Planetenträgers 105 die in einem Planetenhohlrad 109 umlaufend geführten Planetenräder 107 um die Achsen 101 gelagert werden.

In einer Ausgestaltung des Industriegetriebes als Planetengetriebe (oder umfassend wenigstens eine Planetengetriebestufe) weisen die Achsen bevorzugt jeweils wenigstens einen zwischen oder neben der/den laserstrukturierten Fläche/n angeordneten Gleitlagerabschnitt 101.1 auf. Dafür kann an der jeweiligen Achse ein Gleitlagerabschnitt X3 (weiterer Axialabschnitt) vorgesehen sein.

Die jeweilige Achse kann auch durch einzelne Schritte eines Herstellungsverfahrens charakterisiert werden, insbesondere: **Schritt S1** Bereitstellen einer Grundform bzw. eines Grundkörpers der Achse (wobei dieser Schritt auch die Definition der geometrischen Grundform und/oder eine Materialauswahl und optional auch ein Vergüten bzw. Härten des Materials oder einzelner Oberflächenschichten oder Lagen umfassen kann); **Schritt S2** Laser(auftrags)schweißen der Achse und/oder Ausbilden wenigstens eines Gleitlagerabschnitts an der Achse; **Schritt S3** Einbringen wenigstens einer kraftschlüssig wirkenden Oberflächenstruktur an der Achse mittels/durch Laserstrukturierung, insbesondere in fertigungstechnischem Zusammenhang mit Schritt S2; **Schritt S4** Montage der Achse, beispielsweise durch Anwendung eines thermischen Verfahrens oder einer Pressung oder dergleichen. Es hat sich gezeigt, dass die Schritte S2 und S3 vorteilhaft zusammen in einen gemeinsamen Fertigungsprozess auf einer Laseranlage 200 mit Laserschweißeinrichtung integrierten werden können.

Im Folgenden werden Besonderheiten der Erfindung unter Bezugnahmen auf einzelne Figuren bzw. Ausführungsbeispiele erläutert.

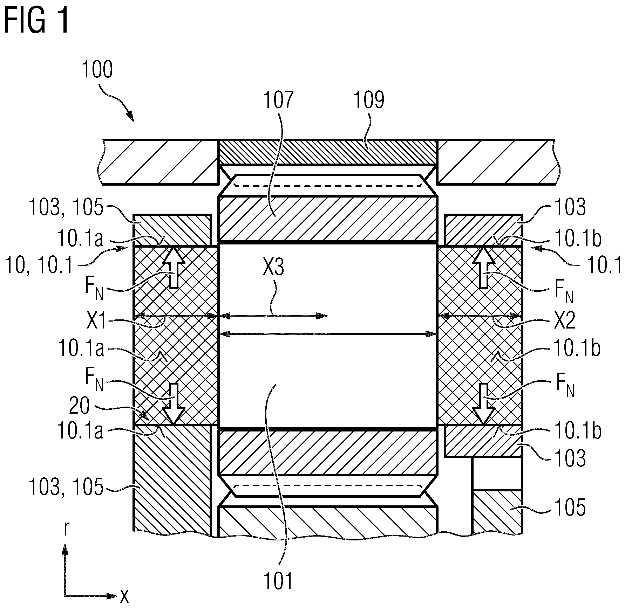

In **Fig. 1** ist eine beispielhafte Anwendung/Verwendung der erfindungsgemäßen Achse 101 gezeigt, unter Bezugnahme auf einen Planetenträger 105 mit Achsaufnahme 103 und daran jeweils axialfest in einem oder zwei Axialabschnitten gelagerten Planetenachsen 101. Das jeweilige Planetenrad 107 wird mittels des Planetenträgers 105 an einer vordefinierten Axialposition gehalten und im Planetenhohlrad 109 umlaufend geführt. In den folgenden Figuren werden unterschiedliche Ausführungsbeispiele gezeigt, welche beispielsweise auch bei einem Getriebe bzw. einer Einbausituation wie in Fig. 1 gezeigt implementiert werden können, wahlweise an einem oder beiden Achsenden (Axialabschnitten) bzw. Kontaktbereichen zwischen Achse und Achsaufnahme. Wie schon weiter oben erläutert, kann die Einbausituation wahlweise auch abweichend gewählt werden, beispielsweise an einer anderen Stelle bzw. anderen Achse oder in einer anderen Getriebeart.

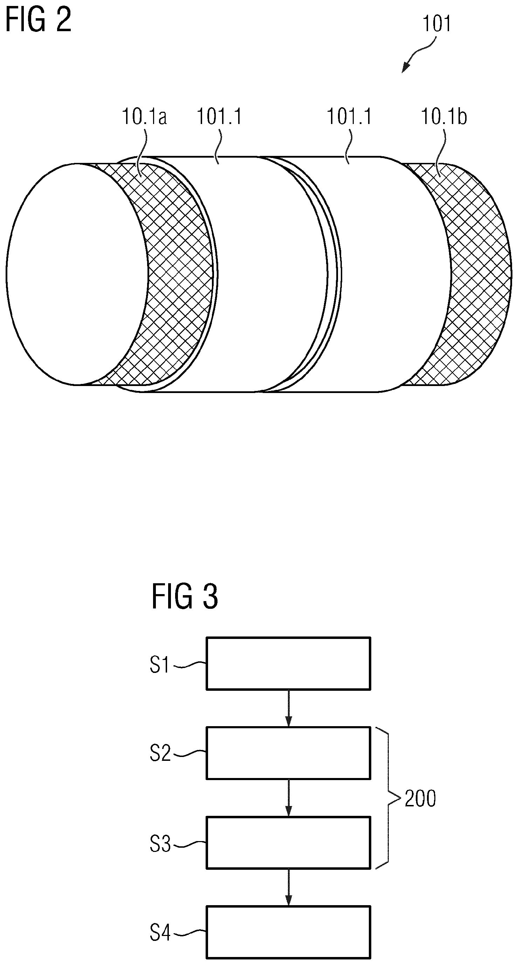

In **Fig. 2** ist eine Achse 101 mit kraftschlüssig wirkenden Laserstrukturoberflächen 10.1a, 10.1b in zwei Axialabschnitten entsprechenden den Kontaktbereichen zur Achsaufnahme gezeigt. Zwischen den laserstrukturierten Oberflächen sind Gleitlagerabschnitte 101.1 vorgesehen (bzw. ein einzelner Gleitlagerabschnitt).

Der Laserstrukturierungsschritt kann dabei mit einem Prozessschritt betreffend ein Laserauftragsschweißen auf der gleichen Anlage ergänzend kombiniert werden. Mittels einer Laserschweißanlage können die zylindrischen (oder konischen) Kontaktbereiche von Achse und Achsaufnahme (also die Achseinspannungen) durch Laserstrukturierung (ohne Materialzufuhr, ohne Schweißgutzufuhr) dabei derart in ihrer Oberflächenstruktur beschaffen werden, dass Reibwerte von >0,5 dauerhaft gesichert sind.

Dabei basiert die Erfindung auch auf dem Konzept, durch ein Mittragen der Achse(n) und auch durch eine Torsionssteifigkeitssteigerung die axiale Bewegung im Achskontakt minimieren zu können; insofern kann eine/die ungewünschte Relativbewegung der jeweiligen Achsen insbesondere in Hinblick auf ein zyklisches axiales Rein- und Rauswandern dank der Laserstrukturoberfläche(n) spürbar unterbunden werden. Dabei kann mittels der (sich nicht abnutzenden) (Laser-)Struktur in Verbindung mit einer möglichst strammen Passung auch eine Lagerung bzw. Kontaktierung oder Verbindung geschaffen werden, die auch mit dem englischsprachigen Begriff "bonded" umschrieben werden kann (Lagerung bzw. direkte Kontaktierung von Achse und Achsaufnahme). Ein für die Auslegung des Industriegetriebes oder zumindest weiterer unmittelbar betroffener Maschinen-/Getriebeelemente nutzbarer/praxisrelevanter (vergleichsweise hoher) Reibwert wird beispielsweise bei 0,8 angesetzt. Der Fachmann kann in Abhängigkeit von konstruktiven Details sowie Anzahl und Stärke der jeweiligen Achse(n) einen für die Auslegung sinnvollen (theoretischen) Reibwert ansetzen.

In **Fig. 3** sind einzelne Schritte eines Herstellungsverfahrens einer hier beschriebenen Achse schematisch angedeutet, nämlich: **Schritt S1** Bereitstellen einer Grundform bzw. eines Grundkörpers der Achse; **Schritt S2** Laser(auftrags)schweißen der Achse und/oder Ausbilden wenigstens eines Gleitlagerabschnitts an der Achse; **Schritt S3** Einbringen wenigstens einer kraftschlüssig wirkenden Oberflächenstruktur an der Achse mittels/durch Laserstrukturierung; **Schritt S4** Montage der Achse. Die Schritte S2 und S3 können wahlweise zusammen in einem integrierten Prozess auf einer Laseranlage 200 mit Laserschweißeinrichtung (oder einer entsprechenden Fertigungslinie) durchgeführt werden. Das Herstellungsverfahren kann wahlweise die Schritte S1 bis S3 oder alle Schritte S1 bis S4 umfassen, je nachdem, ob die Herstellung/Bereitstellung lediglich die einzelnen Achsen 101 oder das gesamte entsprechende Industriegetriebe 100 betrifft.

### Bezugszeichenliste

- 10: Laserstrukturierung
- 10.1: laserstrukturierte/r Oberfläche(nabschnitt) an Außenmantelfläche
- 10.1a: erster kraftschlüssig wirksamer Außenmantelflächenabschnitt
- 10.1b: zweiter/weiterer kraftschlüssig wirksamer Außenmantelflächenabschnitt
- 20: axialfeste kraftschlüssige Verbindung zwischen Achse und Achsaufnahme
- 100: Industriegetriebe
- 101: Achse, insbesondere Planetenachse
- 101.1: Gleitlagerabschnitt bzw. Lagerfläche für Planetenrad
- 103: Achsaufnahme, z.B. Gussbohrung, insbesondere Planetenträgerbohrung
- 105: Planetenträger
- 107: Planet bzw. Planetenrad
- 109: Planetenhohlrad mit Innenverzahnung
- 200: Laseranlage mit Laserschweißeinrichtung
- Fn: Normalkraft im strukturierten Oberflächenabschnitt
- S1: Bereitstellen einer Grundform bzw. eines Grundkörpers der jeweiligen Achse
- S2: Laser(auftrags)schweißen und/oder Ausbilden wenigstens eines Gleitlagerabschnitts
- S3: Einbringen einer kraftschlüssig wirkenden Struktur mittels/durch Laserstrukturierung
- S4: Montage der Achse
- X1: erster Axialabschnitt
- X2: zweiter Axialabschnitt
- X3: Gleitlagerabschnitt (weiterer Axialabschnitt)
- x: axiale Richtung
- r: radiale Richtung

## Patentansprüche

1. Industriegetriebe (100), insbesondere Planetengetriebe, aufweisend wenigstens eine Achse (101) und wenigstens eine Achsaufnahme (103) zur festen Lagerung der Achse, insbesondere Achse eines Planetenrades, wobei die Achse in wenigstens einem Axialabschnitt (X1, X2) in der Achsaufnahme gelagert ist;
**dadurch gekennzeichnet, dass** die Achse (101) mittels wenigstens eines strukturierten, insbesondere laserstrukturierten Oberflächenabschnitts (10.1) kraft-/reibschlüssigen gegen axiale Verlagerung in der Achsaufnahme gelagert ist, wobei die Achse (101) und die Achsaufnahme (103) unmittelbare Kontaktpartner sind.

2. Industriegetriebe (100) nach Anspruch 1 **dadurch gekennzeichnet, dass** die Achse (101) in zumindest einem zylindrischen Oberflächenabschnitt einen kraftschlüssig wirkenden strukturierten, insbesondere laserstrukturierten Außenmantelflächenabschnitt (10.1a, 10.1b) aufweist, welcher derart rein kraftschlüssig in der Achsaufnahme (103) insbesondere in der Art einer Passung zur Anlage kommt, dass eine/die zwischen Achse und Achsaufnahme im entsprechenden Oberflächenabschnitt wirkende Normalkraft (Fn) eine Relativbewegung reduziert.

3. Industriegetriebe (100) nach Anspruch 1 oder 2 **dadurch gekennzeichnet, dass** die strukturierte, insbesondere laserstrukturierte Oberfläche (10.1) zur kraftschlüssigen Abstützung in axialer Richtung in wenigstens einem Axialabschnitt (X1, X2) mit kraftschlüssig wirkender strukturierter, insbesondere laserstrukturierter Oberflächenstruktur mit erhöhtem Haftreibkoeffizient versehen ist, insbesondere einem Haftreibkoeffizient von mindestens 0,5.

4. Industriegetriebe (100) nach einem der Ansprüche 1 bis 3 **dadurch gekennzeichnet, dass** der wenigstens eine strukturierte, insbesondere laserstrukturierte Oberflächenabschnitt (10.1) über den Umfang variiert.

5. Industriegetriebe (100) nach einem der vorhergehenden Ansprüche **dadurch gekennzeichnet, dass** die strukturierte, insbesondere laserstrukturierte Oberfläche (10.1) an wenigstens einer Seite eines um die Achse gelagerten Rades (107) vorgesehen ist; oder wobei die strukturierte, insbesondere laserstrukturierte Oberfläche (10.1) beidseitig eines um die Achse gelagerten Rades (107) ausgestaltet ist.

6. Industriegetriebe (100) nach einem der vorhergehenden Ansprüche **dadurch gekennzeichnet, dass** eine/die Strukturierung des strukturierten Oberflächenabschnitts (10.1) in einzelnen Segmenten des strukturierten Oberflächenabschnitts unterbrochen ist.

7. Industriegetriebe (100) nach einem der vorhergehenden Ansprüche **dadurch gekennzeichnet, dass** innerhalb wenigstens eines Oberflächenabschnitts der Achse (101) eine Liniendichte und/oder Richtung einer/der Struktur und/oder eine Intensität und Form der Struktur individualisiert ist, insbesondere derart dass ein Haftreibkoeffizient von mindestens 0,5 in axialer Richtung über den strukturierten Oberflächenabschnitt (10.1) sichergestellt ist.

8. Industriegetriebe (100) nach einem der vorhergehenden Ansprüche **dadurch gekennzeichnet, dass** das Industriegetriebe (100) als Planetengetriebe ausgestaltet ist, wobei eine/die Achsaufnahme (103) in einem Planetenträger (105) des Planetengetriebes vorgesehen ist, insbesondere in Ausgestaltung als Planetenträgerbohrung, und wobei die jeweilige Achse (101) als Planetenachse formschlüssig gegen Relativbewegungen am Planetenträger (105) angeordnet ist.

9. Industriegetriebe (100) nach einem der vorhergehenden Ansprüche **dadurch gekennzeichnet, dass** das Industriegetriebe in einem Triebstrang einer Windenergieanlage verbaut ist oder dafür konfiguriert ist.

10. Industriegetriebe (100) nach einem der vorhergehenden Ansprüche **dadurch gekennzeichnet, dass** die jeweilige Achse in zwei Axialabschnitten (X1, X2) in der Achsaufnahme (103) gelagert ist, wahlweise jeweils mit zylindrischen oder konischen Kontaktflächen, wobei die strukturierte, insbesondere laserstrukturierte Oberfläche (10.1) in den beiden Axialabschnitten wahlweise die gleiche oder eine unterschiedliche Konfektionierung aufweist; oder wobei die jeweilige Achse in zwei Axialabschnitten (X1, X2) in der Achsaufnahme (103) gelagert ist, nämlich einerseits mit zylindrischer und andererseits mit konischer Kontaktfläche, wobei die strukturierte, insbesondere laserstrukturierte Oberfläche (10.1) in den beiden Axialabschnitten (X1, X2) eine unterschiedliche Konfektionierung aufweist.

11. Verfahren zum Herstellen einer verschleißmindernden Achse (101) zur Verwendung in einem Industriegetriebe (100), insbesondere Planetengetriebe, in wenigstens einer Achsaufnahme (103) zur Lagerung der Achse in der Achsaufnahme, insbesondere zur Verwendung an einem Planetenträger (105) eines Planetengetriebes, wobei in zumindest einem axialen Oberflächenabschnitt (X1, X2) der Achse eine strukturierte, insbesondere laserstrukturierte Oberfläche (10.1) eingebracht wird, die eingerichtet ist zur kraftschlüssigen Abstützung in der Achsaufnahme gegen axiale Verlagerung, insbesondere mittels einer Laserschweißanlage welche ferner auch eingerichtet ist zum Laserschweißen oder Laserauftragsschweißen, insbesondere in Kombination mit dem Ausbilden wenigstens eines Gleitlagerabschnitts (101.1) in einem weiteren Axialabschnitt (X3) der Achse.

12. Verfahren nach dem vorhergehenden Anspruch **dadurch gekennzeichnet, dass** in zumindest einem Oberflächenabschnitt (X1, X2) der Achse eine im Wesentlichen kraftschlüssig wirkende Oberfläche durch wenigstens eine der folgenden Laserstrukturierungsmaßnahmen eingebracht wird, wobei die laserstrukturierte Oberfläche (10.1) bevorzugt in Abhängigkeit von wenigstens einem vordefinierten/vordefinierbaren spezifischen Erhabenheits- und/oder Dichteparameter generiert wird, insbesondere in wellen- oder schlangenlinienförmiger Struktur oder in schuppenartiger Struktur: Laserstrukturieren eines ersten axialen Flächenabschnitts (X1) insbesondere vollumfänglich an der Achse (101), Laserstrukturieren von wenigstens zwei axialen Flächenabschnitten (X1, X2) insbesondere bei Variation der Ausrichtung der Struktur in wenigstens zwei Raumrichtungen, Laserstrukturieren bei axial und/oder rotierend bewegter Achse (101), Laserstrukturieren bei feststehender Achse.

13. Verschleißmindernde Achse (101) für ein Industriegetriebe (100), insbesondere Planetengetriebe, aufweisend eine Achsaufnahme (103) zur Lagerung der Achse, wobei die Achse (101) hergestellt ist durch wenigstens einen der folgenden Schritte: Bereitstellen einer Grundform eines bevorzugt einstückigen Grundkörpers der Achse (101) insbesondere nach einem Laser(auftrags)schweißen oder im Nachgang zu einer Bearbeitung wenigstens eines Gleitlagerabschnitts (101.1) der Achse insbesondere in/mittels derselben Laseranlage (200), Einbringen wenigstens einer zur kraftschlüssigen Abstützung gegen Relativbewegungen eingerichteten strukturierten Oberfläche (10.1) in zumindest einem Axialabschnitt der Achse durch Laserstrukturieren insbesondere gemäß wenigstens einer der folgenden Laserstrukturierungsmaßnahmen insbesondere in Abhängigkeit von wenigstens einem vordefinierten/vordefinierbaren spezifischen Erhabenheits- und/oder Dichteparameter: Laserstrukturieren eines ersten axialen Flächenabschnitts (X1) insbesondere vollumfänglich an der Achse, Laserstrukturieren von wenigstens zwei axialen Flächenabschnitten (X1, X2) insbesondere bei Variation der Ausrichtung der Struktur in wenigstens zwei Raumrichtungen, Laserstrukturieren bei axial und/oder rotierend bewegter Achse, Laserstrukturieren bei feststehender Achse; insbesondere hergestellt durch ein Verfahren gemäß Anspruch 11 oder 12.

14. Verwendung einer Vielzahl von verschleißmindernden Achsen (101) in einem Industriegetriebe (100) mit wenigstens einer Planetengetriebestufe in einer Achsaufnahme (103) eines Planetenträgers (105) zur Lagerung der Achsen, wobei die jeweilige Achse mit wenigstens einem für Kraftschluss eingerichteten Außenmantelflächenabschnitt (10.1a), bevorzugt mit zwei Außenmantelflächenabschnitten (10.1b) beidseitig einer Gleitlagerfläche (101.1), mit kraftschlüssig wirkender laserstrukturierter Kraftschlussstruktur derart kraftschlüssig ohne formschlüssige Konturen in der Achsaufnahme (103) die Achsaufnahme direkt mantelflächig kontaktierend zur Anlage kommt, dass ein Haftreibkoeffizient größer 0,5 sichergestellt ist, insbesondere indem die jeweilige Achse (101) und die Achsaufnahme (103) eine Passung mit vordefinierbarer Normalkraft (Fn) bilden, insbesondere Verwendung der Vielzahl von derartigen verschleißmindernden Achsen (101) für bereits bestehende und verbaute Getriebe/-komponenten.

15. Verwendung wenigstens einer verschleißmindernden Achse (101) in einem Industriegetriebe (100), insbesondere Planetengetriebe, in einer Achsaufnahme (103) zur Lagerung der Achse, insbesondere jeweils als Planetenachsen in einem Planetenträger (105) eines Planetengetriebes, wobei die Achse (101) an einer für Kraftschluss eingerichteten Außenmantelfläche in zwei Außenmantelflächenabschnitten (10.1a, 10.1b) jeweils eine kraftschlüssig wirkende laserstrukturierte Struktur (10.1) aufweist, wobei die Außenmantelflächenabschnitte kraft-/reibschlüssig in der Achsaufnahme (103) angeordnet sind/werden, wobei in einem ersten Außenmantelflächenabschnitt (10.1a) eine erste Laserstruktur und im weiteren Außenmantelflächenabschnitt (10.1b) eine zweite Laserstruktur eingebracht ist, wobei die erste und zweite Laserstruktur unterschiedliche Parameter aufweisen, wobei die Achse (101) bevorzugt thermisch in die Achsaufnahme (103) eingebracht ist/wird, insbesondere mit der Achse auch umfassend wenigstens eine Gleitlagerfläche (101.1) für ein Planetenrad (107).
